Europäisches Patentamt

European Patent Office

Office européen des brevets

(19)

(11) Publication number: **0 044 743**

**A1**

(12) **EUROPEAN PATENT APPLICATION**

(21) Application number: **81303334.7**

(22) Date of filing: **21.07.81**

(51) Int. Cl.³: **F 02 D 19/08**

(30) Priority: **23.07.80 NZ 194425**

(43) Date of publication of application:
**27.01.82 Bulletin 82/4**

(84) Designated Contracting States:
**AT BE CH DE FR IT LI LU NL SE**

(71) Applicant: **Tessari, Ermino**
**35100 Padova Via**
**I-69000 Venezia(IT)**

(71) Applicant: **Brown, Lloyd Gilbert**
**64 Courtenay Place**
**Wellington(NZ)**

(72) Inventor: **Tessari, Ermino**
**35100 Padova Via**
**I-69000 Venezia(IT)**

(72) Inventor: **Brown, Lloyd Gilbert**
**64 Courtenay Place**
**Wellington(NZ)**

(74) Representative: **Haggart, John Pawson et al,**
**Page, White & Farrer 27 Chancery Lane**
**London, WC2A 1NT(GB)**

(54) A Diesel/gas engine conversion means.

(57) A diesel/gas engine conversion means converts a diesel engine to operate as a diesel/gas engine by installing an electric actuator (5), a speed sensor (4) and a control unit (8) with the actuator (5) mounted on the engine relative to the diesel injector pump (2) so that a gas regulating valve (9) may be mounted between the electric actuator (5) and the throttle (3) of the injection pump (2), the valve (9) being operably responsible to movement of the throttle (3) and electric actuator (5) to regulate the gas flow.

FIG.1.

FIG 3.

EP 0 044 743 A1

# A DIESEL/GAS ENGINE CONVERSION MEANS

This invention relates to a diesel/gas engine conversion means for dual fuel high compression engines designed to run on compressed natural gas and diesel. The invention is particularly concerned with means for converting a normal diesel engine to operate as a dual fuel diesel/gas engine.

The combustion process in dual fuel engines using a gaseous fuel is complex. We believe a commercially acceptable control means particularly adapted for the simple conversion of a diesel engine to a diesel/gas engine has not previously been available.

The combustion process in the gas diesel engine is comprehensively reviewed by Professor Karim in Prog. Enery Combust. Sci., volume 6 pages 277 to 285. Patents which illustrate the complex means previously employed for controlling the acceptable pattern of fuel introduction into a dual fuel engine may be seen in United States Patent 2569002 Holloway et al and 2571571 Hanners et al. The simple approach but without effective control is also illustrated in United States Patent 3753424 Haidvogel.

- 1 -

The present invention enables a normal diesel engine to be converted to a diesel/gas engine by the use of precision control equipment to sense and monitor the engine performance and use an actuator in this equipment in association with a gas metering valve to deliver supply of gas while at the same time applying means to restrict the normal diesel injection engine pump to limit the diesel entering the combustion chambers of the engine.

One way of carrying out the invention is described in detail below with reference to the drawings which illustrate only one specific embodiment, in which:-

Figure 1 is a partly diagrammatic side elevation of a diesel engine showing conversion means according to the present invention fitted thereto,

Figure 2 is an exploded pictorial view of the gas metering valve,

Figure 3 is a sectional view through the gas metering valve in the closed position,

Figure 4 is a front elevation of the injector pump rack control,

Figure 5 is an end view of Figure 4,

Figure 6 is a top part view of Figure 4,

Figure 7 is a side view of a gas injecting probe,

Figure 8 is a sectional view on line A-A of Figure 7,

Figure 9 is a gas ring injecting means, and

Figures 10 to 12 are typical illustrative graphs of performance of an engine using the present invention.

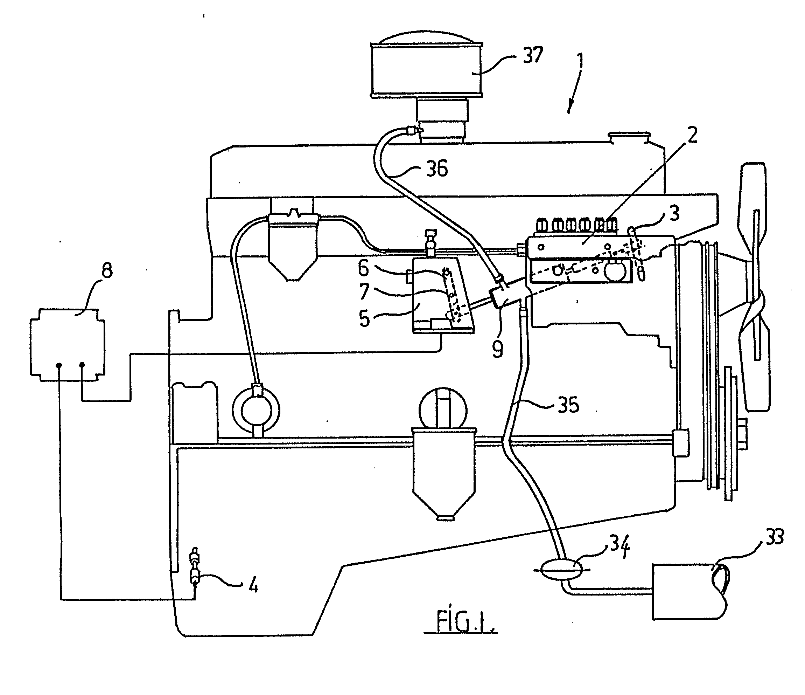

A diesel engine 1 of conventional design is illustrated in Figure 1. The diesel injection pump and governor assembly 2 has a throttle arm 3 arranged to be

actuated by a remote control to allow for variable speed operation of the engine. To this standard engine is fitted a speed sensor 4 preferably a magnetic pick up located adjacent the fly wheel of the engine. A Bosch speed control unit has been found suitable for this purpose.

An electric actuator 5 is mounted on the engine 1 in operative relationship with the engine injection pump throttle arm 3. The actuator is held on the engine by a suitable mounting bracket. A Bosch actuator AGB 200 is an acceptable unit for this purpose. The actuator 5 has an arm 6 with a series of adjustment apertures 7 therein preferably there are also a series of position ajustment apertures in the arm 3.

A control unit is necessary to monitor the signal generated by the magnetic pick up 4 and to use that signal as a control to regulate the electric actuator 5. The control unit is diagrammatically illustrated at 8 at present in figure 1 and of course is electrically connected to 4 and 5. Physically the unit may be located at any convenient position associated with the engine or vehicle in which the engine is operated. A Bosch governor control unit ECD 67/2111 is suitable for this purpose although a simpler electronic control may also be used to achieve the objectives of the present invention.

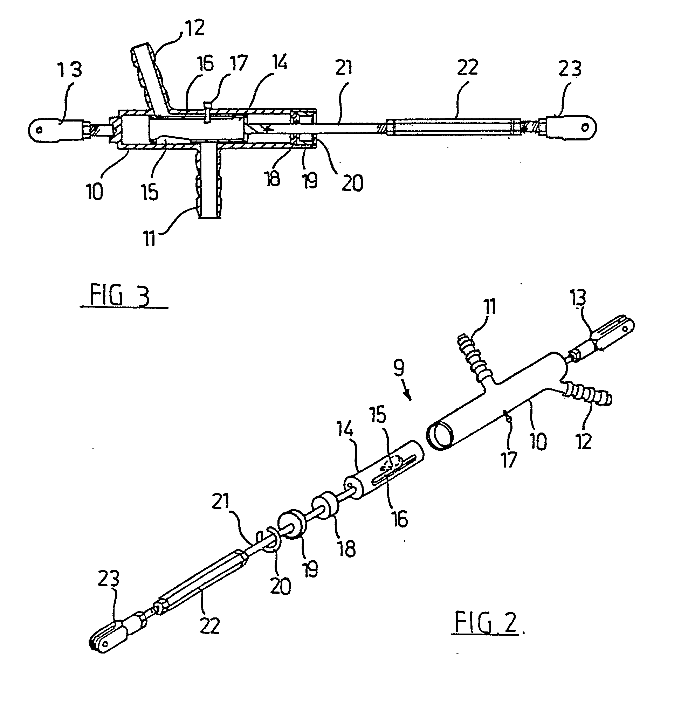

A gas metering valve 9 is located between the arm 6 and the arm 3. This gas metering valve is more particularly illustrated in figures 2 and 3 of the accompanying drawings. A body 10 has a gas inlet 11 and a gas outlet 12. A connector 13 allows the body to be connected to the arm 7.

A piston 14 is moveable within the body 10 and acts as a valve restricting flow of gas from the inlet 11 to the outlet 12. A pear-shaped or parabolic port 15 is formed through the side of the piston and when in line with the inlet 11 allows gas to flow through the port and as the skirt of the piston exposes the outlet, out the outlet valve. A locating slot 16 in association with locating screw 17 ensures the piston will not turn. The piston is located in the body by a gas seal 18 a backing ring 19 and a circlip 20. The rod 21 connected to the piston has a length adjustment 22 therein and a connector 23 which in use is connected to the lever 3. A cross section through the valve in the assembled and closed position is shown in figure 3.

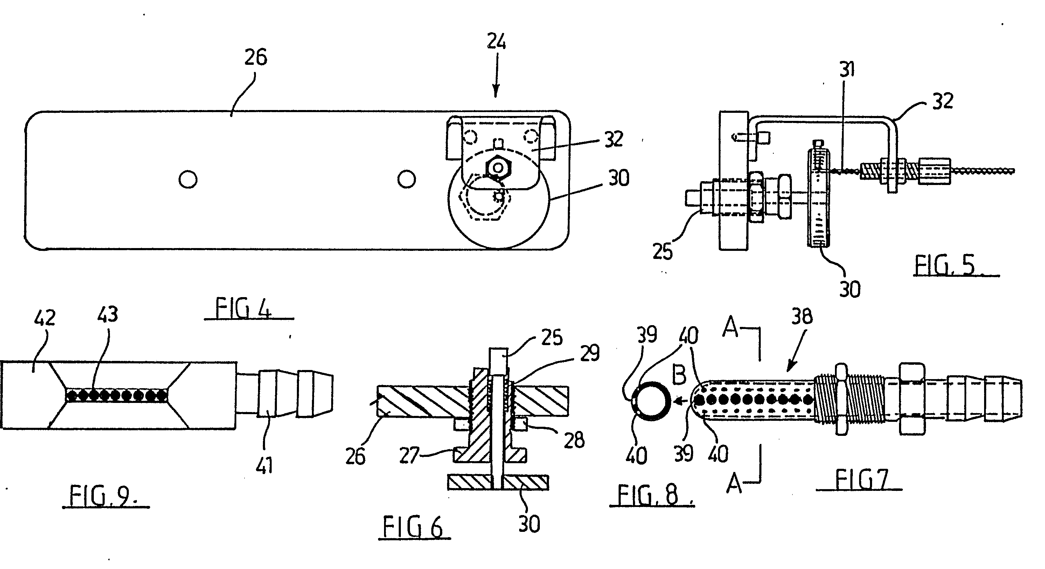

The injector pump rack control 24 illustrated in figures 4 to 6 of the drawings is required to limit the operation of the diesel injection pump. To this end an adjustable pin or stop 25 is able to be engaged in the rack to limit movements thereof. A bracket 26 is mounted on the side of the injection

- 4 -

pump rack and held in place by two studs. The pin 25 is mounted to allow disengagement from the rack and also to allow for limited adjustment. This is achieved by locating the pin eccentrically in a stud 27 threaded into the bracket 26. Rotation of the stud will cause the pin 25 to be moved about the centre of the stud and a lock nut 28 allows the member to be located in position providing a limited lateral movement at the stop pin relative to the rack. The pin 25 is biased to the extended position by a biasing spring 29 and the shank of the pin is fitted to a head 30 which has a control cable 31 fitted extending through a bracket 32. Rotation of the compensating adjustment head 30 will ensure the operating cable or other disengagements is in line irrespective of the adjustment position of the pin. In the drawings this assembly is shown suitable for manual operation although it will be appreciated it could equally well be electrically or solenoid operated using essentially the same components.

The invention could also incorporate two pins as above described arranged to limit the range of the movement of the rack. Control means could ensure the pins operate independently.

This preferred bracket is designed for an injection pump rack but a rotary injection pump can also be modified for use with the present invention by associating the stop control in the valve with the position limiting control as above described. The purpose in use in either installation is to ensure the amount of diesel fuel which can be delivered in response to the governors actuation is restricted thereby forcing actuation of the control means connected to the gas metering valve and the introduction of the necessary gas to achieve the desired engine control.

The compressed natural gas is stored in a cylinder bank 33 and the compressed gas is delivered to a regulator 34. The pressure from the storage cylinder is reduced by the regulator to a comparatively low pressure of between 20 and 40 kilopascals. Variation in the pressure of gas over the range will proportionately influence the horse power in the engine. The gas from the regulator 34 passes through line 35 to the gas metering valve 9 and from the gas metering valve through line 36 to the air inlet 37 of the engine.

The means by which the gas is introduced into the air flow can vary. A probe is illustrated in figures 7 and 8. The probe 38 which is screwed into the throat of the air inlet has a pattern of apertures on the downstream side when fittted in use. A row of apertures 39 approximately 2.5 mm in diammeter are flanked on each side by a row of apertures having a diameter of a row of apertures 40 having a diameter of 1.5 mm. These apertures are only on the downstream side with the flow of air indicated by arrow B in figure 8.

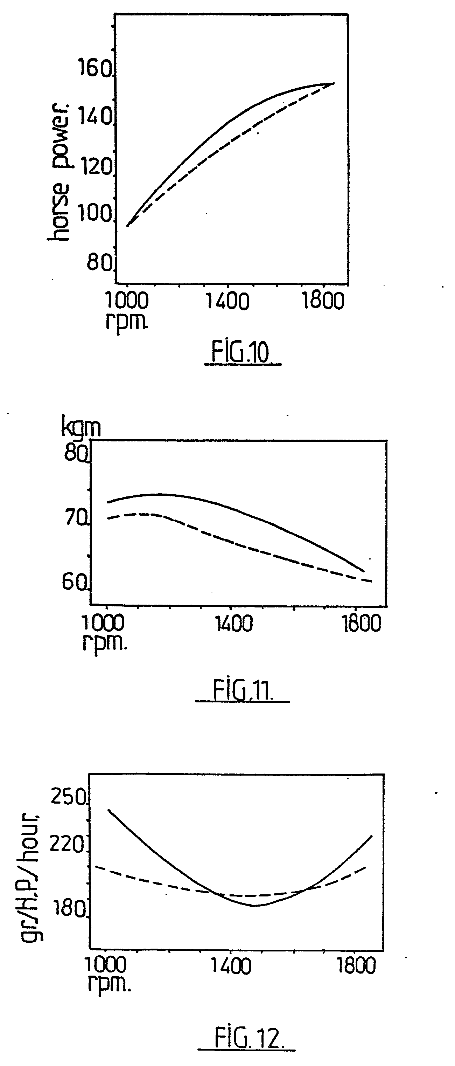

An alternative venturi type gas air mixer is illustrated in figure 9. In this instance the gas is introduced through the inlet 41 into a ring chamber 42 to be discharged through a circle of apertures 43 with a venturi effect generated at the throat of the inlet as illustrated diagrammatically in figure 9.

The gas air mixture could also be caused to pass through a super charger designed not only to introduce the air and gas mixture to the combustion chambers at higher pressure but also to allow for a transfer of heat using the super charger as a vehicle for such transfer of heat from the exhaust gases to the air and gas mixture being introduced into the combustion chambers.

The present invention is designed to be fitted to a conventional diesel engine and allow that diesel engine to be modified from straight diesel use to diesel/gas use. The results of typical tests conducted on such a converted engine are depicted in figures 10, 11 and 12 with the solid graph being the diesel/gas operation and the dotted linegraph being the diesel operation. In figure 10 the horse power achieved using gas pressure towards the higher range of the gas pressure was shown to be an improvement over the ordinary diesel operation over the full normal operative range of engine speeds. Similarly the torque test illustrated in figure 11 again shows a marked improvement using the diesel/gas mix as opposed to the diesel. The specific consumption is also illustrated and shows that over the load working range again the diesel/gas compares very favourably with diesel.

Claims:

1.    A diesel/gas engine conversion means to convert a
diesel engine to operate as a diesel/gas engine said conversion means comprising an electric actuator mountable upon a
diesel engine in operative relationship with the diesel·
injection pump throttle, a speed sensor to sense the speed
of the engine; a control unit to operate the actuator in
response to information received from the speed sensor; an
injector pump control means operatively associated with the
injection pump to restrict the amount of diesel passing
therethrough; a gas metering valve connectable between the
electric actuator and the throttle said valve being operatively responsive to movement of the throttle and movement
of the electric actuator to regulate the flow of gas through
the gas metering valve; the gas supply means to said gas
valve; gas·delivery means from said valve and gas air mixing
means connected to the gas delivery means and mountable in
the air intake of the engine.

2.    A diesel/gas engine conversion means as claimed in
claim 1 wherein said gas metering valve comprises a body; a
gas inlet to said body; a gas outlet from said body; a valve
member operable within the body to regulate the flow of gas
from the inlet to the outlet with the body and the valve
member being operatively connected between the electric
actuator and the throttle so that regulatory movement
influencing the flow of gas can be controlled by either the
throttle arm or the electric actuator.

3. A diesel/gas engine conversion means as claimed in claim 2 wherein the gas metering valve comprises a cylindrical body, a piston operable within said body, a port increasing in width along the axis of movement of the piston to produce essentially a parabolic port in the wall of the piston with the cylindrical body attached to a connector and the rod projecting from the piston also attached to a connector allowing the gas metering valve to be located between the electric actuator and the arm of the throttle.

4. A diesel/gas engine conversion means as claimed in claim 3 wherein length adjustment means are provided to adjust the length of the gas metering valve between the point of connection with the electric actuator and the throttle control arm.

5. A diesel/gas engine conversion means as claimed in any one of the preceding claims wherein the injection pump control means has a removable pin operatively inserted in association with the pump to restrict movement of the pump components and limit the amount of diesel which can be passed therethrough.

6. A diesel/gas engine conversion means as claimed in claim 5 wherein the injector pump control means for use with an injection pump rack comprises a bracket bolted or otherwise suitably secured in association with the bracket a retractable pin mountable in the bracket and in an extended position arranged to engage with the rack said pin being eccentrically located in a mounting stud fixed in the bracket to allow for linear movement relative the rack for fine tuning and with said pin being retractable against a biasing means by use of manual or electric control means to move the pin to a position disengaged from said rack.

7. A diesel/gas engine conversion means as claimed in any one of the preceding claims wherein the gas air mixing means comprises a probe insertable into the air flow and having rows of apertures on the downstream side of the air flow through which the gas is injected into the air stream.

8. A diesel/gas engine having an electric actuator mounted there upon in operative relationship with the diesel injection pumps throttle arm, a speed sensor mounted relative to the flywheel to sense the speed of the engine, a control unit to operate the electric actuator in response to information received from the speed sensor, an injector pump control means restricting the operation of the pump and thereby the amount of diesel fuel which may be passed through the pump to the cylinders of the engine, a gas metering valve connected between the electric actuator and the throttle, said valve being operatively responsible to movement of the throttle and of the electric actuator to regulate the flow of gas, the gas supply from a cylinder through a pressure regulator to the gas valve, gas delivery means from the valve to the air inlet of the engine and gas and air mixing means connected to the gas delivery means to introduce the gas into the air flow passing through the cylinder.

9. A diesel/gas engine as claimed in claim 8 wherein the gas is introduced through the regulator to the gas valve at a pressure of from between 20-40 kilopascals.

FIG. 1.

FIG 3

FIG 2.

FIG.4.

FIG.9.

FIG.6.

FIG.8.

FIG.7.

FIG.5.

0044743

FIG.10.

FIG.11.

FIG.12.

## EUROPEAN SEARCH REPORT

European Patent Office

Application number

EP 81 30 3334.7

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 724 436 (S. NAGATA et al.) <br> * abstract; column 2, lines 36 to 46; fig. 1, 2 * <br> --- | 1 | F 02 D 19/08 |
| | US - A - 3 443 551 (M.T. LAUBACH) <br> * claims; column 2, lines 4 to 55; fig. 1 to 3 * <br> --- | 1,2, 3,7 | |
| | AT - B - 282 259 (ÖSTERREICHISCHE SAURERWERKE AG) <br> * claims; page 2, line 48 to page 3, line 32; fig. 1 to 3 * <br> --- | 1,5 | TECHNICAL FIELDS SEARCHED (Int. Cl.³) |
| | FR - A1 - 2 441 732 (STE GENERALE FRANÇAISE DE TRANSPORTS ET D'ENTREPRISES) <br> * claim 1; page 6, lines 8 to 11 * <br> --- | 9 | F 02 B 7/06 <br> F 02 B 43/00 <br> F 02 D 19/00 <br> F 02 M 13/08 <br> F 02 M 51/00 |
| | US - A - 3 790 139 (R.A. STEPHENSON et al.) <br> * claim 4a; fig. 3, 4 * <br> --- | 7 | |
| D,A | US - A - 3 753 424 (D. HAIDVOGEL) <br> * whole document * <br> --- | | CATEGORY OF CITED DOCUMENTS <br> X: particularly relevant <br> A: technological background <br> O: non-written disclosure . <br> P: intermediate document |
| A | AT - B - 280 693 (ÖSTERREICHISCHE SAURERWERKE AG) <br> * whole document * <br> ./.. <br> --- | | T: theory or principle underlying the invention <br> E: conflicting application <br> D: document cited in the application <br> L: citation for other reasons |

X | The present search report has been drawn up for all claims

&: member of the same patent family, corresponding document

| Place of search | Date of completion of the search | Examiner |
|---|---|---|
| Berlin | 16-10-1981 | CANNICI |

EPO Form 1503.1 06.78

# 0044743

European Patent
Office

**EUROPEAN SEARCH REPORT**

Application number

EP 81 30 3334.7
page 2

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | <u>DE - B2 - 2 604 734</u> (LANDI DEN HARTOG B.V.)<br>* whole document *<br>-- | | |
| A | <u>US - A - 3 540 419</u> (C.B. FOX)<br>* whole document *<br>---- | | TECHNICAL FIELDS SEARCHED (Int. Cl.³) |

EPO Form 1503.2  05.78